**Europäisches Patentamt**

**European Patent Office**

**Office européen des brevets**

(19)

(11) Publication number : **0 682 274 A1**

(12) **EUROPEAN PATENT APPLICATION**

(21) Application number : **95303016.0**

(22) Date of filing : **03.05.95**

(51) Int. Cl.$^6$ : **G02B 6/245**

(30) Priority : **10.05.94 US 241227**

(43) Date of publication of application :
**15.11.95 Bulletin 95/46**

(84) Designated Contracting States :
**DE FR GB**

(71) Applicant : **AT & T Corp.**
**32 Avenue of the Americas**
**New York, NY 10013-2412 (US)**

(72) Inventor : **Paczkowski, Mark Anthony**
**4 Forest Road**
**Andover, New Jersey 07821 (US)**
Inventor : **Suhir, Ephraim**
**21 Leigh Court**
**Randolph, New Jersey 07869 (US)**

(74) Representative : **Johnston, Kenneth Graham et al**
**AT&T (UK) Ltd.**
**5 Mornington Road**
**Woodford Green Essex, IG8 OTU (GB)**

(54) **Device for stripping a polymer coating from optical fiber.**

(57)    Optical fibers typically comprise a protective polymer coating, frequently a dual coating. For splicing of fibers, as well as for many other reasons, it is necessary to remove the coating from a length of fiber. This can inter alia be accomplished by mechanical means, and stripping tools are known. Such stripping tools typically comprise a blade, or a pair of opposed blades, that cut into the fiber coating and are used to apply an axial (shear) force to the coating. Although prior art stripping tools work adequately in many circumstances, it is frequently difficult to cleanly remove relatively long lengths L of dual polymer coating from optical fiber. We have now discovered that removal of the coating from a length L of fiber is facilitated if the tool comprises a multiplicity of blades arranged such that the coating is cut not only at a point a distance L from the fiber end but also at a point L' from the fiber end, where L' < L.

EP 0 682 274 A1

## Field of the Invention

This invention pertains to devices for removing a polymer coating from a length of coated optical fiber.

## Background of the Invention

Glass optical fibers typically are provided with a polymer coating during fiber manufacture. To connect an optical fiber to another fiber or to equipment such as electronic, opto-electronic or optical apparatus, it is generally necessary to remove the coating from an end portion of the optical fiber.

Various techniques for removing polymer coating from optical fiber are known, including chemical, thermally assisted mechanical, and mechanical ones. For reasons of, e.g., safety and convenience, chemical stripping methods are not preferred, at least not for field applications. Consequently, it is desirable that coated optical fibers (including the widely used dual-coated optical fibers which typically comprise a, relatively compliant, inner or primary coating and a less compliant outer or secondary coating) have good strippability, i.e. lend themselves to easy mechanical removal of the coating. However, the requirement of good strippability typically is in contradiction with the need of good adhesion of the coating to the glass fiber. For instance, it is believed to be important for reliable performance of dual-coated optical fibers that the primary coating adhere well to the fiber surface. Thus, adhesion typically cannot be compromised for the sake of good strippability.

A variety of mechanical stripping tools are known, and several are commercially available. See also J. R. Toler et al., Proceedings of the 38th International Wire and Cable Symposium, Atlanta, GA, November 1989, p. 509, which inter alia describes three different types of mechanical stripping tools. Many prior art stripping tools perform adequately under most ordinary circumstances. However, it is frequently difficult to cleanly strip relatively long lengths of coating, especially dual coating, in a single pass, resulting inter alia in reduced efficiency of operations. Thus, it would be desirable to have available mechanical stripping tools that are less subject to this shortcoming of prior art stripping tools. This application discloses such tools.

## Brief Description of the Drawings

FIG. 1 schematically illustrates the principle of prior art mechanical fiber stripping devices;
FIG. 2 schematically illustrates relevant aspects of mechanical fiber stripping devices according to the invention; and
FIG. 3 schematically depicts an exemplary embodiment of a multi-blade fiber stripping tool.
The drawings are not intended to be to scale or to show exact proportions.

## The Invention

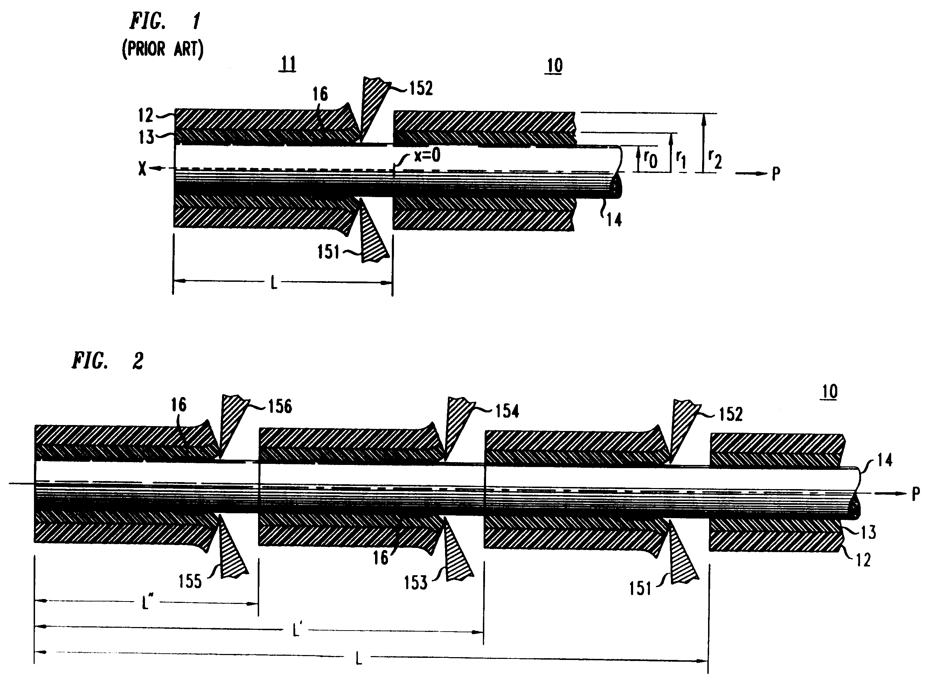

The invention is as defined by the claims. FIG. 1 schematically illustrates the principle of coating removal by prior art mechanical means. Numeral 10 refers to the dual-coated optical fiber, 11 to the length L of fiber from which the coating is to be stripped, and 12-14 to the secondary coating, primary coating and glass fiber, respectively. The fiber typically is placed on support means (not shown), one portion of which supports the length L of fiber, and the other supports the fiber that is to retain its coating. The former will be referred to as the "end support", and the latter as the "fiber support". Optional lower blade 151 is attached to the end support portion, and upper blade 152 is attached to the end support portion such that it can be lowered onto the fiber. With a coated fiber in place and held in fixed position with respect to the fiber support by appropriate clamping means (not shown), upper blade 152 is lowered onto the fiber at position x=0 (where x is the axial coordinate shown in FIG. 1), such that both blades cut into the polymer coating, desirably such that the cuts at least extend through secondary coating 12, and such that the blades do not damage glass fiber 14. Application of axial force P results in (total or partial) delamination of the primary coating 13 from the glass fiber, and stripping of length L of coating from the end of the fiber. Heavy lines 16 schematically indicate delamination. Optionally means are provided for holding length L of the fiber against the end support, in order to prevent or reduce buckling of the coating as it is being stripped from the fiber. Exemplary of a fiber stripper that functions substantially as described above is Fujikura Ltd.'s Hot Jacket Stripper HJS-01, which comprises heating means and is adapted for stripping of optical fiber ribbons.

It will be understood that the above described coating stripper is exemplary, and that many variants are known. For instance, the stripper can be adapted for single or multiple fiber stripping, can have a single straightedged blade or two opposing straight-edged blades disposed in the same plane, as shown, or can have one or two blades with semicircular cut-outs. Furthermore, the stripper can comprise heating means and/or means for scoring and breaking the glass fiber. We believe that substantially all types of mechanical coating strippers can be readily modified to embody the invention.

J. R. Toler et al. (op. cit) have experimentally analyzed the factors that affect mechanical stripping of dual acrylate coatings from optical fibers, and concluded that, for the fibers and stripping tools tested, "... the length of coating removed in one pass does not strongly affect the peak strip force for 250μm diameter fiber coatings." Lengths of coatings removed in one pass were from 1 to 5 inches.

However, contrary to the above finding, it has been observed that it is frequently difficult or impossible to cleanly remove from optical fiber in one pass relatively long lengths of dual-coating, e.g., lengths in excess of about 15-20 mm. We have found that this shortcoming can be overcome if the coating stripper comprises a multiplicity of spaced-apart blades, such that the total length L of coating to be removed is divided into two or more shorter lengths.

Theoretical analysis similar to that used in E. Suhir, Applied Optics. Vol. 32 (16), p. 3024, June 1, 1993, shows that the interfacial shearing stress ($\tau_o(x)$) at the glass fiber/polymer coating interface during stripping of dual-coated optical fiber can be at least approximately expressed as follows:

$$\tau_o(x) = (kP/2\pi r_o)(\text{cotanh } u \cosh kx - \sinh kx) \quad (1)$$

In equation 1, x is the axial coordinate (see FIG. 1), P is the applied external force, and $r_o$ is the radius of the glass fiber. Furthermore, $k = (2\pi r_o \lambda / \kappa)^{1/2}$ is the eigenvalue of the problem, and $\lambda = \lambda_o + \lambda_2$ is the total axial compliance of the glass-coating composite, where $\lambda_o = (\pi E_o r_o^2)^{-1}$, and $\lambda_2 = (\pi E_2 (r_2^2 - r_1^2))^{-1}$, the axial compliances of the glass fiber and the secondary coating respectively. $E_o$ and $E_2$ are Young's moduli of the glass and the secondary coating material, $r_1$ and $r_2$ are as defined in FIG. 1, and $\kappa = (r_o/G_1) \ln (r_1/r_o)$ is the shearing compliance of the primary coating, where $G_1 = E_1(2 + 2\nu_1)^{-1}$ is the shear modulus of the primary coating material, with $E_1$ and $\nu_1$ being Young's modulus and Poisson's ratio of the primary coating material. The parameter u is expressed as $u = kL = L(2\pi r_o \lambda / \kappa)^{1/2}$, with L as defined in FIG. 1.

Evaluation of equation 1 shows that maximum and minimum shearing stress occur at x=0 and x=L, respectively, and are

$$\tau_{max} = \tau_o(0) = (kP/2\pi r_o)\text{cotanh } u; \text{ and} \quad (2)$$
$$\tau_{min} = \tau_o(L) = (kP/2\pi r_o)(\sinh u)^{-1}. \quad (3)$$

For large values of L (e.g., u greater than about 2.5), equation 2 is approximately equal to $kP/2\pi r_o$, and for small values of L (e.g., u less than about 0.3) it is approximately equal to $P/2\pi r_o$ L. Furthermore, for large values of L, $\tau_o$ (L) is approximately equal to zero, and for small values of L it is approximately equal to $P/2\pi r_o L$. These results imply that for relatively short stripping lengths the interfacial shearing stress is approximately independent of x, whereas for relatively long stripping lengths the interfacial shearing stress decreases significantly with increasing x.

The above remarks on the results of the theoretical analysis are provided solely for pedagogic reasons, and the validity and scope of the claims in no way depend on the correctness of the analysis.

Our investigations have led us to the conclusion that relatively long lengths of polymer coating are stripped more readily from glass optical fiber if the total length is divided into two or more segments. This can be accomplished efficiently by means of a novel stripping tool that comprises means for cutting the polymer coating at two or more locations along the stripping length.

More particularly, an embodiment of the invention is an article that comprises a device for removing a polymer coating from a length L of optical fiber. The optical fiber has a longitudinal axis and an end. The device comprises at least one blade for cutting the polymer coating at a first location a distance L from the end of the optical fiber. The blade is movable from the first location towards the end of the optical fiber such that, after cutting of the polymer coating at the first location, the polymer coating is stripped from the length L of optical fiber. Significantly, the device comprises a multiplicity of blades for cutting the polymer coating, with at least one of the blades positioned to cut the polymer coating at a second location a distance L' from the end of the optical fiber, where L' is less than L, exemplarily about half of L. Exemplarily L - L' is in the range 10-15 mm.

FIG. 2 schematically illustrates the principle of coating removal by means of a device according to the invention. The device exemplarily comprises three sets of blades (151 and 152, 153 and 154, and 155 and 156) with one blade of each pair movable in a plane normal to the axial direction of the fiber, such that the blades can be caused to cut into the polymer coating (12, 13) of dual coated fiber 10 at first, second, and third locations, respectively distances L, L' and L" from the end of the fiber. The "retained" portion of the fiber (i.e., the portion that is not to be stripped) is held by appropriate means and, after cutting the coating, the blades are moved in the fiber axial direction towards the end of the fiber, whereby a total shear force P is applied to the cut coating. This results in delamination of the coating from glass fiber 14, schematically indicated by heavy lines 16, and stripping of the coating from the length L of fiber. Those skilled in the art will appreciate that typically a stop or stops can be provided such that the blades are prevented from closing onto the glass fiber. The retained portion of the fiber can be held by hand, although preferred embodiments of the device generally will comprise means that secure the retained portion of the fiber to the device, substantially as known from prior art devices.

Those skilled in the art will also appreciate that the invention can be embodied in devices for stripping a single optical fiber as well as in devices for stripping optical fiber ribbon. In the former case there will typically be provided means (e.g., a groove in a fiber support plate) that serve to fix the fiber laterally. The blades can have semicircular cut-outs to enhance the cutting action. Furthermore, the invention can be incorporated in a stripping tool that comprises heating means, substantially as known from prior art tools.

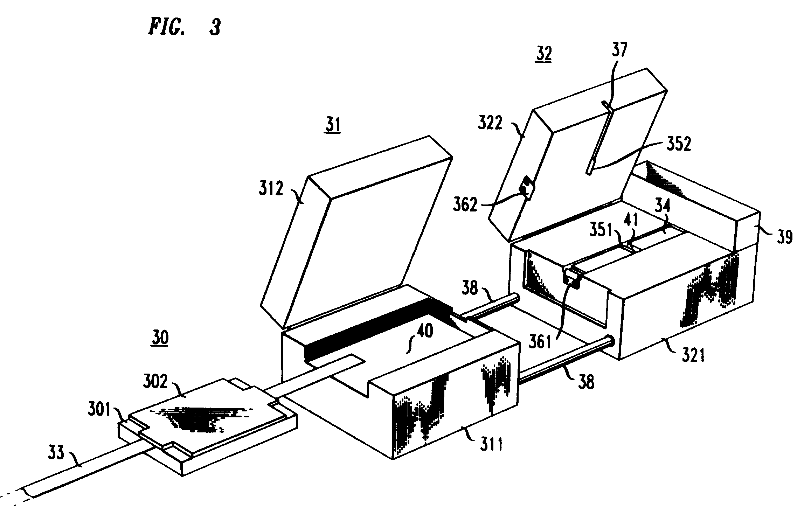

FIG. 3 schematically shows relevant features of an exemplary multiblade tool for stripping optical fiber ribbon. The tool comprises end support assembly 32, fiber support assembly 31, and ribbon clamping assembly 30. Ribbon 33 is placed on lower plate 301 of the clamping assembly, with an appropriate length of ribbon extending towards assembly 31. After placement of upper plate 302 onto the ribbon, the clamping assembly is placed into recess 40 in lower part 311 of assembly 31. Upper part 312 of the assembly is attached to the lower part by appropriate means (e.g., hinges) such that it can be closed upon the lower part. By urging together parts 311 and 312 the ribbon can be held fixed with respect to assembly 31.

Assembly 31 is movably connected to end support assembly 32. Exemplarily, guide rods 38 facilitate longitudinal motion of the former with respect to the latter. Assembly 32 comprises lower part 321 and upper part 322, and optionally comprises ribbon stop 39. If desired, part 321 or stop 39 can comprise heating means. Upper part 322 is attached to lower part 321 by appropriate means (e.g., hinges) such that the former can be closed upon the latter. A first set of blades (361 and 362) is provided, substantially as known from the prior art. A recess 34 in body 321 receives the end of fiber ribbon 33, with blades 361 and 351 extending a predetermined distance above the bottom of the recess. The extension is selected such that the blades can cut sufficiently into the fiber coating without damaging the glass fibers. Blades 351 and 352 exemplarily are provided at a location substantially equidistant from stop 39 and the first set of blades, exemplarily about 10-15 mm from the first set of blades. The blades are attached to the upper and lower bodies of assembly 32 by any appropriate means, e.g., by insertion into slots 37 and 41, respectively. Blades 352 and 362 extend below the lower surface of body 322 by a predetermined distance selected to result, upon lowering of body 322 onto 321, in cutting into the polymer cladding of the fiber ribbon, without causing damage to the glass fibers. Desirably, stops (not shown) are provided to insure that the blades do not make contact with the glass fibers.

In order to strip the polymer coating from the length of ribbon that extends from assembly 31 towards assembly 32, the former is moved longitudinally towards the latter, typically until the assemblies are in contact. Care is taken that the length of fiber ribbon is positioned in recess 34. Upper part 322 is lowered onto the lower part such that the blades cut into the polymer coating. The cutting is followed by application of sufficient axial force to move apart assemblies 31 and 32. This results in stripping of the coating from the end portion of the ribbon, with clean stripping of relatively long lengths facilitated by the presence of the multiple (exemplarily two) sets of blades.

It will be understood that the embodiment of FIG. 3 is exemplary only, and other embodiments are contemplated. For instance, lower blades 351 and 361 could be omitted, or upper blades 352 and 362 could be omitted. Furthermore, minor changes (e.g., replacement of recess 34 by a V-groove, and analogous modification of clamping assembly 30) can make the tool suitable for stripping of single fibers.

**Claims**

1. A device for removing a polymer coating (12, 13) from a length L of optical fiber, said fiber having a longitudinal axis and an end, wherein said device comprises at least one blade (e.g., 152) for cutting said polymer coating at a first location a distance L from the end of the optical fiber, said blade being movable, after cutting the polymer coating at the first location, from the first location towards the end of the fiber, such that the polymer coating is removed from the length L of the optical fiber;
   CHARACTERIZED IN THAT
   the device comprises a multiplicity of blades (e.g., 152, 154, 156) for cutting the polymer coating, with at least one blade positioned to cut the polymer coating at a second location a distance L' from the end of the optical fiber, where L' is less than L.

2. A device according to claim 1, wherein L-L' is in the range 10-15 mm.

3. A device according to claim 1, wherein said multiplicity of blades is attached to an end support assembly (32), and the device comprises a fiber support assembly (31) that is adapted for holding the fiber fixed with respect to the fiber support assembly, with the fiber support assembly being movable in a longitudinal direction relative to the end support assembly.

4. A device according to claim 1, wherein the device is adapted for removing the polymer coating simultaneously from a multiplicity of optical fibers.

EP 0 682 274 A1

FIG. 1
(PRIOR ART)

FIG. 2

FIG. 3

**European Patent Office**

## EUROPEAN SEARCH REPORT

Application Number

EP 95 30 3016

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 3 no. 111 (E-138) ,17 September 1979 & JP-A-54 088137 (TOKYO SHIBAURA DENKI K.K.) 13 July 1979, * abstract * --- | 1-4 | G02B6/245 |
| X | PATENT ABSTRACTS OF JAPAN vol. 7 no. 278 (P-242) ,10 December 1983 & JP-A-58 154802 (NIPPON DENSHIN DENWA KOSHA) 14 September 1983, * abstract * --- | 1-4 | |
| X | EP-A-0 544 053 (SUMITOMO ELECTRIC INDUSTRIES LTD,) 2 June 1993 * column 4, line 42 - column 5, line 31; figure 1 * --- | 1-4 | |
| A | ELECTRICAL COMMUNICATION, BRUSSELS BE, 1st quarter 1994; p. 52-59; B. Joly: "Optical interfaces in cable networks" ----- | 2-4 | |
| | | | **TECHNICAL FIELDS SEARCHED (Int.Cl.6)** G02B |

The present search report has been drawn up for all claims

| Place of search | Date of completion of the search | Examiner |
|---|---|---|
| THE HAGUE | 11 August 1995 | Sarneel, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)